# EUROPEAN PATENT SPECIFICATION

(11) **EP 2 526 710 B1**
(45) Date of publication and mention of the grant of the patent: **26.03.2014**
(21) Application number: 11703238.3
(22) Date of filing: 20.01.2011
(51) Int. Cl.: H04W 24/08

(54) **METHOD AND SYSTEM FOR MONITORING THE PERFORMANCE OF A NETWORK**
VERFAHREN UND SYSTEM ZUR ÜBERWACHUNG DER NETZWERKLEISTUNG
PROCÉDÉ ET SYSTÈME DE SURVEILLANCE DU FONCTIONNEMENT D'UN RÉSEAU

(30) Priority: 22.01.2010 GB 201001068
(43) Date of publication of application: 28.11.2012
(60) Divisional application: 14155657.1
(73) Proprietor: Wadaro Limited, Daresbury, Cheshire WA4 4FS (GB)
(72) Inventor: WAKELING, Robert, Cheshire WA4 4FS (GB); CLARK, Hayden, Cheshire WA4 4FS (GB)
(74) Representative: Moore, Graeme Patrick
(86) International application number: PCT/GB2011/000068
(87) International publication number: WO 2011/089389

(56) References cited:
- WO-A1-00/67507
- WO-A2-98/43455
- WO-A2-03/041422
- WO-A2-2008/014421

## Description

The present invention relates to a method and an associated apparatus/system for monitoring the performance of a network, e.g. a wireless network, and for providing corresponding reports which are used to establish characteristics of the network and/or network service. In particular, but not exclusively, the present invention relates to a telecommunications network which incorporates (e.g. wireless) telecommunications devices, e.g. mobile telephones (sometimes referred to as "cell phones").

WO03/041422 discloses the delivery of mobile station operational and self-performance test results to network in response to encrypted request message(s). W02008/014421 discloses apparatuses and methods for determining connection quality metrics in respect of a communication device and communication network.

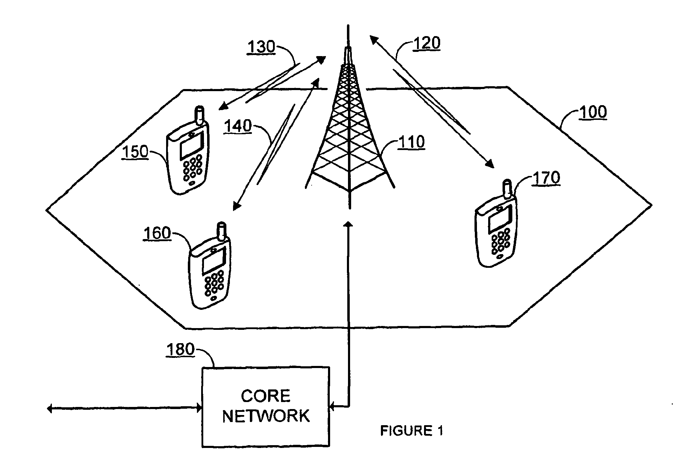

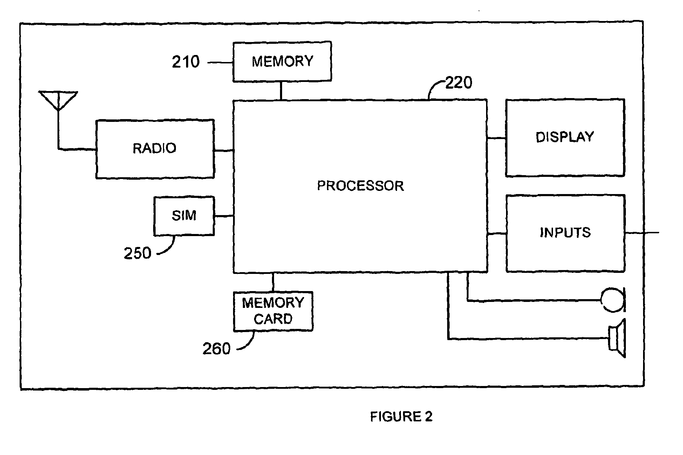

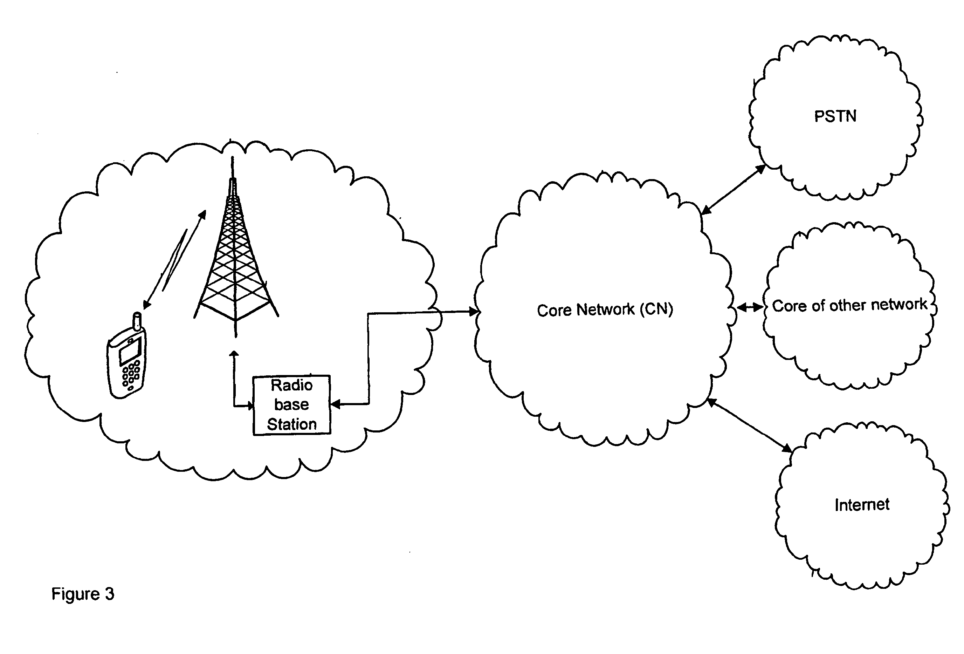

Telecommunications devices are typically remotely operated and rely for their implementation on remote access to a telecommunications network (see Fig. 1). Wireless examples of this include telecommunications devices such as (mobile) telephones (see Fig. 2) which enjoy wireless access (e.g. via a Radio Access Network, see Fig. 1) to a telephone network (Core Network, see Fig. 3).

In order identify the subscriber and determine whether or not they are authorised to use service provided over such a network, the network infrastructure typically maintains a list of (mobile telephone) handsets that are allowed to make use of the network. However, typically, instead of the handsets themselves being identified, a specialized kind of smart card (called a SIM - Subscriber Identity Module) is installed in each handset. The network infrastructure queries the SIM directly via the handset in order to determine eligibility for service. As the SIM is constructed in a secure way, the user is unable to make unauthorized use of the network, or to impersonate another user, by tampering with the identifying mechanisms but is merely allowed to use service they are entitled to.

The user also has the convenience of using a different handset by simply moving the SIM to the new handset.

However, the SIM device is not just a means of storing identifying information. It contains a small computer, augmented by cryptographic hardware, and is capable of running programs independent of any computing ability of the host handset. The communications link between the handset and the SIM allow the handset to request SIM services, both on behalf of the network and for its own purposes. It also allows programs in the SIM to make use of handset services.

The reliable implementation of telecommunication devices such as this requires both reliable access to a telecommunications network and reliable operation of the telecommunications device itself.

Accordingly, (network) operators of such telecommunications networks typically continuously monitor the performance of their network equipment and service consumption by subscribers to their service, with a view to understanding the correct and incorrect performance of their service. Such performance monitoring can take the form of quantitative measurement(s) of certain characteristics relating to particular elements of the telecommunications network and/or of qualitative assessment(s) of such characteristics, for example.

Typically, network operators are particularly interested in monitoring the reliability of the following characteristics of the network:
1. subscriber access to service (e.g. can subscribers get service and how quickly);
2. whether subscribers can maintain access to the service (e.g. do they 'drop off the network?); and
3. can they use service (e.g. are they able to make calls, is the call 'quality' good?).

By 'service' is meant, for example:
- the ability of subscribers to receive inbound calls at any time and in any location
- the ability of subscribers to make outbound calls at any time and in any location
- any call to continue until either the subscriber or their co-respondent choose to terminate the call, irrespective of the location or change of location of the subscriber.
- the ability to send and receive short messages.
- the ability for internet data-driven applications on the subscriber's terminal to exchange data with internet-connected services.

These user-centric service aspects are delivered by a particular radio telephony network by:
- ensuring that the subscriber's terminal remains in radio contact with one of the network's radio base stations.
- having enough capacity in the communications network that links the radio base stations to each other, and to other networks to ensure that calls and internet data can be carried.
- maintaining data integrity in the records of subscriber terminals and in the network infrastructure such that subscriber service requests are successfully processed.
- maintaining knowledge of the location of subscriber terminals to allow inbound calls to be successfully routed.

Conventional techniques employed by network operators to "measure" the performance of a network include "drive test" and "probing":
- "Drive test" is as the name suggests - motor vehicles fitted with specialist telecommunications test equipment are physically driven around a defined path (usually trunk roads and highways), and the test equipment samples the radio aspects of the network being tested (this is sometimes referred to as passive monitoring) and/or synthesizes service usage by programmatically using the service; for example it might automatically establish and maintain a voice connection or it might make packet data access connection to a pre-defined server. Data collected during the drive test is subsequently provided, at a convenient time e.g. at the end of the day, to the network operator for processing into a useful report indicative of the performance of the network at specific positions along the defined path, at specific times and for specific service requirements (network operations);
- "Network Probing" is a technique which can be understood from Fig. 3 - a Core Network (CN) is made up of various Network Elements (NEs), each NE interoperates with a neighbouring NE and communicates via fixed communications links. In some common network standards, the reference architecture for a mobile network labels these NE interconnecting communications paths (See figure 3). The practice of network probing typically requires specialist equipment, connecting either to the NE or the communication paths between NEs, to acquire data. Each NE usually makes available information about its own operation (what is its own performance e.g. CPU load, disk space, memory consumption, data throughput, etc.) and information about the task it is performing (e.g. throughput as a boarder gateway to the internet, to what address is a subscriber connecting on the internet, what service are they using [HTTP, POP3, SMTP, etc]). The equipment, e.g. probes, applied to the NEs or the communication pathways between them acquires performance and task related data and subsequently processes it into management reporting.

For both drive test and network probing, monitoring can be either passive or active.

Passive means that drive test equipment or network probing equipment (e.g. CN probes) simply listen and gather data for processing.

Active means that the network being tested is stimulated by the testing to see how the network responds (drive test makes a call, network probing equipment inject pseudo data into the NE or NE communication pathways).

Fundamental deficiencies in at least the above described conventional techniques include, but are not limited to, the following points.
- Drive testing is discrete in terms of time and space, in other words it does not provide continuous (or even quasi-continuous) coverage in terms of time and space.
- Drive testing is not a scalable solution as it requires significant human resource to operate the expensive specialist equipment and vehicles and network operators cannot apply drive test to their entire network.
- There is a need for good public infrastructure - drive testing can only be applied if there is a road network of sufficient quality to enable the vehicles to drive around the locations to be tested on the predefined path.
- Telecommunications regulators often oblige network operators to provide periodic benchmark data that demonstrates whether or not service is being provided at a level of quality required by that regulator.
- Drive test does not measure the quality of service received by users, the conditions being measured during drive test are usually unlike the conditions in which users use the service (e.g. inside a building, in an airplane, in the countryside where there may be no vehicular access).
- Network probing can be both discrete and continuous. However, in both cases it is not indicative of the quality of service experienced by the user. As mentioned above, probing involves the acquisition of data from elements in the core network, from this data performance is derived by sophisticated applications operated by highly trained and experienced staff.

It is also known to configure telecommunications devices (terminals) used by the users (e.g. "mobile telephones" or "cell phones") to monitor the network performance, and to report, for example, to the network operator. A justification for terminal based service monitoring is that it provides the network operator with an accurate report on the performance of the service across the network all the way down to the individual user.

However, terminal based service monitoring is disadvantageous in that a telecommunications network has a finite available bandwidth, which ideally should be reserved for user operation. Allocating a significant portion of the bandwidth to the transmission of network performance reports from user terminals is therefore undesirable, and has the consequence that such terminal based service monitoring could cause a "snowballing" effect leading to overload of the network, as more and more user terminals monitor and identify problems in the network and issue reports, leading in turn to bandwidth reduction and therefore more reports being issued.

Accordingly, the present inventors have realized that there is a need for a method of monitoring a telecommunications network, which fairly represents the performance of the network as perceived by users, but which during its operation does not adversely affect the network (e.g. the operating bandwidth of the network), to the detriment of the network service provided to (and as desired by) the users.

Generally, this disclosure describes a method of monitoring the performance of a telecommunications network, which network includes one or more user terminals each configured to be capable of communicating with a monitoring means of the network, wherein the method includes the steps of:
providing (for example in a user terminal, of the one or more user terminals) a respective weighting factor for each of a plurality of types of service event which can occur in the network;
the user terminal identifying the occurrence of a first event in the network, which first event is of a first type of service event belonging to the plurality of types of service event; and
determining (for example, within the user terminal) on the basis of the respective weighting factor whether to issue a notification concerning the identified first event from the user terminal to the monitoring means or not;
wherein the method includes the step of:
   (1) configuring the notification to be sent to include weighting factor information which is indicative of the weighting factor associated with the identified first event; or
   (2) configuring the notification to be sent to include the weighting factor associated with the identified first event.

Also described is a method of monitoring the performance of a telecommunications network, which network includes one or more user terminals each configured to be capable of communicating with a monitoring means of the network,
wherein the method includes the steps of:
providing in a user terminal, of the one or more user terminals, a respective weighting factor for each of a plurality of types of service event which can occur in the network;
the user terminal identifying the occurrence of a first event in the network, which first event is of a first type of service event belonging to the plurality of types of service event;
deriving within the user terminal the value of a notify factor on the basis of the value of the respective weighting factor associated with the identified first event, the value of the notify factor determining whether to issue a notification concerning the first event from the user terminal to the monitoring means or not; wherein
if it is determined to send the notification, then the notification to be sent is configured to include weighting factor information which is indicative of the value of the weighting factor associated with the identified first event.

Accordingly, provided is a method which eliminates the need to send a respective notification for each identified event occurrence.

Preferably, a network operator is able to measure the service provided to individual users (user terminals) over the network. Furthermore, it is preferred that the network operator is able, by aggregating data from user devices (terminals), to measure the performance of one or more elements of the serving (service) network, e.g. across the entire geographical area of intended use, and/or e.g. across the entire intended scope of services (telephone calls, SMS, MMS, data transfer and/or internet provision, etc.). Thus, provided is a method (and means) for achieving this without burdening the network with an excessive number of notifications.

The weighting factor, or an indication of the value of the weighting factor, is provided in the notification (or, is provided in such a manner that it can be determined by the monitoring means and/or user terminal as being associated with a particular notification (e.g. concerning a particular event or type of event)) such that when the notification is received and processed by the monitoring means, the relative importance of the notification can be assessed because the value of the weighting factor provides an indication of the likelihood that the notification would be sent.

Indeed, the value of each weighting factor is preferably indicative of the likelihood of a notification being issued/sent for each respective (associated) event. For example, the weighting factor preferably makes the issuance of a notification relatively more or less likely - relative, that is, to the issuance of a notification concerning a respectively different type of event having a respectively different weighting factor.

The or each weighting factor for a given service event may be made to be dependent on the one or more characteristics of the user terminal relative to the network. For example, when the user terminal is present at a particular node in the network (e.g. when the mobile telephone is, preferably wirelessly, linked to a particular network cell), then the weighting factor may be modified in response, e.g. so as to make notification of the associated service event type more likely - or alternatively, less likely. An example of a benefit associated with this is that if a known problem exists at a particular node, then when a user terminal is associated with that node, the weighting factor provided in the user terminal which is associated with one or service events indicative of the known problem can be modified. For example, the modification may reduce the likelihood that a notification will be issued reporting one or more service events associated with that problem, so as to try to prevent a high rate (and/or a high absolute number) of notifications concerning the problem from unnecessarily burdening the network.

The characteristics of the user terminal relative to the network may include, but are not limited to: spatial variations, temporal variations, cell ID variations etc. Each weighting factor may include or may be related to a respective rate index indicative of the number of times that a notification has been issued for the associated type of service event in a predetermined period of time.

Indeed, the method may include the step of modifying the value of each weighting factor, on the basis of the value of the respective related rate index, to maintain a rate of notification for each type of service event within a predetermined range for the respective type of service event. This allows the rate of notifications to be "throttled" according to the conditions of the network. Thus, it is possible to balance the amount of network bandwidth consumed by service event reporting with the desired accuracy of the resulting performance analysis.

For example, when a rate index reaches or surpasses a first threshold value each related weighting factor is modified to reduce the likelihood of a notification, concerning the associated type of service event, being issued during the predefined period of time. The first threshold may be an upper threshold of rate notification.

In addition, or alternatively, when a rate index reaches or surpasses a second threshold value each related weighting factor is modified to increase the likelihood of a notification, concerning the associated type of service event, being issued during the predefined period of time. The second threshold may be a lower threshold of rate notification.

The value of each weighting factor may indicate, or determine, that one in every n^{th} identified event occurrence should result in the notification being issued for the respective type of service event. The value of n may be 1 for one or more important types of event, so as to guarantee that the event is notified to the network operator. However, it is preferable that for most (and even more preferable that for all) types of event, that the value of n can be represented as a positive integer greater than 1. Therefore, there is no requirement to send a notification for every identified event occurrence.

Also described is a step of modifying the respective weighting factor associated with the type of service event to which the first event belongs, in response to the identification of the first event by the user terminal. Therefore, the issuance of a notification can be controlled on the basis of the number of times a particular type of event has been identified as occurring. Furthermore, preferably, for a second event identified by the user terminal, being of the same type of service event as the first event, and being identified as occurring subsequent to the first event, the step of deriving the value of the notify factor is performed on the basis of the modified weighting factor.

Accordingly, each weighting factor may include, or may be related to, a count index indicative:
of the number of times that the respective associated type of service event has been identified as having occurred and/or;
of the number of times that the respective associated type of service event has been identified as having occurred since the previous issuance of a notification concerning the same respective type of service event.

Each time a type of service event is identified as having occurred, the count index related to, or included in, the respective weighting factor may be modified to reflect the identified occurrence.

When the count index reaches or surpasses a threshold value, the weighting factor is modified
(i) to increase the likelihood of a notification, concerning the associated type of service event, being issued,
(ii) to reduce the likelihood, of a notification, concerning the associated type of service event, being issued, or
(iii) to ensure issuance of a notification, concerning the associated type of service event. Therefore, the bandwidth usage of the network attributable to event notification can be throttled accordingly, whilst ensuring that a particular type or types of service event will be notified.

So, for example, a relatively common event such as an "expected end of call" (e.g. where one of the parties to a call willfully terminates the connection) will have associated with it a weighting factor such that a notification is relatively unlikely to be issued when the event is detected. However, a less common event such as an "unexpected end of call" (e.g. a "dropped call", when a telephone call is not successfully connected or terminates unexpectedly e.g. due to a poor radio link) will have associated with it a weighting factor such that a notification is relatively more likely to be made. In other words, typically, the probability of sending a report of a successful call that ends normally will be much lower than the probability of sending a report of a call that ends unexpectedly - as most calls are successful. However, it is still preferable to report successful calls, as often it is more desirable to report the number of unexpected call drops or failed calls as a ratio to the number of successful calls to give an indication of the health of the network.

According to the present invention as claimed in claim 1, the step of deriving the notify factor includes the step of generating a random number on the basis of the weighting factor, the notify factor being derived from the generated random number. The random number generated may be limited to a predefined number of significant figures. Preferably, the random number generated is an integer. Preferably, the range in which the random number to be generated is set to be between 0 and the value of (or indicative of) the weighting factor. Preferably, if the generated random number matches a predefined value, or falls within a predefined sub-range of the aforementioned range, then it is judged that a notification concerning the identified event (event type) should be sent. Therefore, the notify factor indicates that a notification should be sent, for example.

Accordingly, the present invention provides that the issuance of a notification concerning a particular event (event type) takes place at random but with a predefined likelihood of occurring, according to the weighting factor.

Thus, when analyzing the notification and weighting factor information e.g. by the monitoring means, the analysis can return an indication as to the relative importance which should be ascribed to the received notification, and/or the information contained therein.

Preferably, the notification judged to be sent is configured to include event information, which is information indicative of the nature of the first event.

Preferably, the monitoring means determines the event type from the event information included in the received notification.

Therefore, a network operator can be provided with a (performance) report on the actual service as it is being experienced e.g. by a user (e.g. via a user terminal), and preferably the report is not derived from 2^{nd} order data. Network operators typically derive service experience from information the network infrastructure provides. Their KPIs (key performance indicators) are thus related to the network parameters, rather than the actual experience, e.g. Handoff Success Ratio (HOSR) is the ratio of attempts to move a call from one cell to another that succeed. A low HOSR is indicative of the users' experience of dropped calls. However, there are other causes of dropped calls, and so a complete measure or dropped calls must be derived by adding all the network events that indicate a dropped call.

The value of one or more of the respective weighting factors provided in the or each user terminal is modifiable by sending a modification instruction via the network to the or each user terminals. Therefore, the notification rate for one or more types of service event can be adjusted dynamically e.g. in response to received notifications.

Further aspects of a telecommunications network according to the present invention, and adapted to carry out the above described method, is set forth in the appended claims. Likewise, a user terminal, according to the present invention, for use in a suitably configured telecommunications network is set forth in the appended claims.

### In the Figures:

Fig. 1 shows a conventional Radio Access Network;
Fig.2 shows a telecommunications device by which the present invention can be implemented; and
Fig.3 shows a Core Network of a telecommunications network (a mobile telephone network) suitable for implementing the present invention.

### Detailed description

Figure 1 illustrates through remote mobile telephone handset devices 150, 160, 170 each operable to access a telecommunications network (not shown) by forming a telecommunications link therewith to enable access to telecommunication network services provided thereby. Each mobile phone device is also arranged to communicate with a remote server station not forming a part of the aforesaid network and including a transceiver 110 operably linked to, and in communication with, a server device 180.

Each of the mobile telephones 150, 160, 170 is able to transmit telecommunications messages to, and to receive telecommunications messages from 130, 140, 120 the server station whilst within the transmission or reception range 100 of the transceiver 110.

For brevity, the following description refers to a "mobile telephone". However, this term is intended also to refer to any user terminal capable of operating in a network, preferably a wireless network as described herein. The user terminal may be in the form of a remote mobile telephone handset or a cellular telephone handset.

In an embodiment of the present invention, a mobile telephone 200 is provided for use in a network, for example a mobile telephone network. The steps of the present inventive method executed within the mobile telephone may be executable by a SIM card 250 which is able to be received within the mobile telephone 200. Alternatively, some or all of the steps of the present inventive method executed within the mobile telephone may be executable by means provided as one or more component parts of the mobile telephone handset itself. For brevity, the following description will refer to a mobile telephone performing the steps of the method, but it is expressly stated that the description is equally applicable to the SIM card performing some or all of the steps of the method in addition to or instead of the mobile telephone handset. The user terminal may include a Universal Subscriber Identity Module such as a USIM card which performs one or more steps of the present inventive method. The invention in any of its aspects, may be applied to fixed-line, mobile or wireless communications technologies or telephone technologies.

Figure 2 schematically illustrates a mobile phone device arranged to implement the methods described above. The mobile phone device 200 contains a processor 220 programmable or operable to implement the present inventive method, a permanent memory unit 210 and preferably a supplementary memory unit 260 in the form of a replaceable memory card. Each of the memory facilities serves, and is operably connected to, the processor 220 of the mobile phone. A subscriber identity module 250 (SIM card) is contained within the mobile phone device and is operably connected to the processor 220. The processor may contain a computer program, or executable code, which, when executed by the processor, implements the method described herein any desired embodiment. For example, the implementation may be realised as a "smart phone" application which may be installed on the mobile phone device at the time of manufacture, or thereafter e.g. in the mobile phone factory, in the receiving service provider's distribution centre, or by a user/subscriber of the mobile phone device. The implementation may, alternatively, be deeply embedded as an application integrated into the low-level software architecture of the mobile phone device. For example, the code implementing the invention may be part of, or combined with, the code which controls and operates the other functions of the mobile phone device.

Alternatively, the programmable card (e.g. SIM card) may contain an executable computer programme which implements the above methods, in any embodiment, as, for example, a SIM application. For example, execution may be performed in a "Java Virtual Machine (JVM)" contained within a SIM card or the like.

The mobile telephone is adapted to be able to detect and register respective service events, such as an unexpected end of call (e.g. an erroneous end of call) and an expected end of call (e.g. an end of call executed by a participant in the call).

A radio transmitter 240, in conjunction with transmission control software implemented by the processor 220, provide a means to prepare and transmit information from the mobile telephone. For example, the mobile telephone is adapted to be capable of notifying the network operator of service events via a report. For example, the mobile telephone may be configured to issue a report in the form of an SMS text message to the network operator to alert the operator to one or more service events. Preferably, each report is configured to include a plurality of such notifications, for example 5 or 10 notifications.

Accordingly, the mobile telephone 170, 200 preferably includes the memory 210 or 260 as a buffer for storing one or more reports until a desired number of notifications is included in the or each report. Alternatively, the or each report may be stored in the memory for a predetermined period of time or until a predetermined point of time is reached (e.g. midnight local time) prior to being sent - for example, in the event that the desired number of notifications has not been reached in the respective report.

The present invention is not limited to the use of SMS text messages, alternative means by which the report (e.g. one or notifications) can be transmitted to the network operator includes, but is not limited to: MMS, USSD, GPRS, email etc.

The present invention can be implemented by means of a software agent provided in a mobile telephone (user terminal) 170, 200 as shown in Figs. 1 and 2. Preferably, the software agent should require relatively little commutation and storage resources so that a regular SIM (provided in e.g. a mobile telephone handset) can execute the present inventive method instead of the handset itself.

Preferably, the software runs in "background mode", meaning that the user does not perceive that the software is being executed by his or her terminal, e.g. mobile telephone.

The mobile phone device 200 further includes display means 230 to allow the display of information to a user and input means 270, such as keys of a keypad, enabling operation of the mobile phone by a user. A microphone and a speaker 280, 290 are provided to permit audible communication when using the mobile phone. The display means, the input means and the speaker and microphone are each operably connected, and in functional communication with, the processor unit 220.

The processor unit 220 is preferably arranged to monitor the operation of the mobile telephone to detect the occurrence of service events, e.g. a network access failure. Detection of such events may be achieved using any of the suitable existing methods available for this purpose such as would be readily apparent to the skilled person. For example, this may be achieved by implementing a software application on the SIM card via the processor.

Preferably, to provide a picture of service quality across the entire network, it is desirable to have as many as possible or all mobile telephones (user terminals) reporting the service events (leaving/entering coverage, failure to make a call, unexpected call termination) that indicate service quality in accordance with the present invention.

Typically, the following services are required from the host system:
- Events generated when various things happen, together with the associated parameters:
   ○ Change of network location
   ○ Call dialled
   ○ Call connected
   ○ Call disconnected
   ○ Periodic poll
- A timer event
- Automatic start on power-up
- Access to the SIM serial number and the handset serial number
- The ability to send SMS without alerting the user.
- Persistent storage.

In an embodiment of the present invention, various data is acquired in the mobile telephone and is processed into an Event Notification. Each Event Notification type has an associated probability factor associated with it. Each time an Event Notification is generated, a randomising function derives a number, for example in the range 0 to "probability", where probability is related to the probability factor. If the random number generated is zero then the Event notification is added to the memory (buffer) for transmission to the network operator as a report.

Upon receipt, the network operator preferably disassembles the report into individual Event Notifications (assuming there are a plurality of notifications in the report) and each notified service event is ascribed a weight based on the "probability" that was set.

For example:
Probability of 0 (2⁰=1): The event represents the transmission of a notification of the event after detection of the event (once) by one handset.
Probability of 1 (2¹=2): The event represents the transmission of that event twice.
Probability of 2 (2²=4): The event represents the transmission of that event four times.

Using this method, events can be notified each time they occur (if desired for one or more types of service event) or (more preferable) at random depending upon the event type probability and the outcome of the randomising function. This leads to a facility whereby:
notification is evenly weighted across the operators subscriber base; notification can be controlled to have individual event types reported more or less frequently;
the operator is enabled to more or less aggressively monitor individual subscribers; and
overall consumption of the RAN can be controlled up or down

Preferably, according to the present invention, the probability factor is adaptive to allow dynamic control of the frequency and/or rate of notification issuance over time.

So, for example, an index may be provided which keeps track of e.g. the notification rate (e.g. the number of notifications per unit time), the number of times a particular type of event has occurred, or the number of times a particular type of event has been notified has having occurred. Accordingly, when the index reaches or surpasses (i.e. drops below or exceeds) a predetermined threshold, the probability factor may be modified in response so as to adjust the likelihood of a notification being issued.

The or each index could be related to a particular network node, for example a cell site (e.g. a mobile telephone network transceiver 110 or a geographic area covered by a plurality of such transceivers). Therefore, it is possible, according to the present invention to throttle the notification rate, for example, for a given network node to optimize usage of the available network bandwidth.

As the or each index is preferably ultimately associated with a respective type of service event, the present invention allows for the notification rate, for example, for a given type of service event to be throttled to optimize usage of the available network bandwidth. Indeed, one or more indexes may be provided to cover a subset of service events. Likewise an index may be provided to cover all identified service events. One or more indexes may be provided which gives an indication of the ratio of different types of service events that have been identified.

In an embodiment, the probability factor can be based on a random determination of whether to send the notification or not, biased in the ratio 1:n. In another embodiment, the probability factor can be related to a simple count, in which e.g. the first identified occurrence of a particular type service event results in a notification being issued, and then subsequently identified n-1 occurrences of the same type of service event do not result in a notification being issued.

The probability values should be chosen in order to balance the amount of network bandwidth consumed by service event notification, and the desired accuracy of the resulting performance analysis. Typically, for example, the probability of sending a notification of a successful call that ends normally will be much lower than the probability of sending a report of a call that ends unexpectedly, as most calls are successful. But, as mentioned above, it is still preferable to report successful calls, as it is often desirable to report the number of unexpected call drops or failed calls as a ratio relative to the number of successful calls.

The probability factors may be controlled centrally from within the network, and modified "over-the-air" by issuing a modification signal to the or each user terminal instructing modification of one or more of the probability factors. However, according to the invention it is also possible to configure a target report rate, and/or a target balance of service event types, with the software agent autonomously modifying the probability factor for reporting each service type dynamically so as to achieve these targets. In this way, each instance of the software agent modifies its behaviour to account for the user's usage patterns, and network service experience.

Preferably, the present invention allows for tracking of the ending of calls and reporting calls that are dropped (i.e., end without user involvement). Accordingly, the status of a call can be tracked by analysing the data that arrives on various events:
- Change of network location
   ○ Capture the current network location data.
- Call dialled
   ○ Be prepared for an outgoing call
- Call connected
   ○ Detect the direction of the call (inbound, or outbound). For outbound calls, the call can be marked as "successful"
- Call disconnected
   ○ Capture the disconnect cause information.
   ○ Use this, and the data from previous events, to diagnose the type of call, if it connected, and why it failed.
   ○ Read the configuration to determine which probability factor to use.
   ○ Perform a "coin toss" operation, with the weighting against a "true" result being controlled by the probability factor.
   ○ If the result is "true" pack the information about the call end into a data packet, encode it suitably to be sent over SMS, and send it, together with the probability factor used.

An extension of the present invention yields a system that provides a network wide 'finger print' of service performance. The rate of change in the data collected by the method can be made dependent on the frequency and amount of service consumed by subscribers and the rate at which prevailing network conditions change (e.g. in Winter trees have no leaves so there less signal interference from wet leaves or, during the holiday season, subscribers travel abroad and roam onto other networks).

To provide a facility whereby the system can be configured to be consistently responsive, an aspect of this invention has handsets, e.g. selected at random, being more active with respect to monitoring of the network. This can be achieved as follows:
1. The mobile telephone maintains several sets of Event Notification probability configurations (e.g. as described above)
2. The mobile telephone maintains a configuration that determines the duration of burst monitoring
3. A randomising function generates a probability (e.g. as described above). If the resulting random number is zero then the currently effective Event Notification configuration data (the Event Notification probabilities) is changed for another which is used next to determine when Event Notifications are added to the message buffer
4. When the duration mentioned in 2 above has expired, the now effective Event Notification configuration data is replaced by the data in effect before burst monitoring was started (i.e. return to the original state)

By implementing burst monitoring, responsiveness of a system based on the present inventive method can be assured.

### Example

One of the largest mobile telephone network operators in the UK currently processes approximately 20 billion SMS (text messages) a year - which is 625 per second, over the entire UK network which includes approximately 15000 cell sites. The operator is estimated to have 13 million subscribers, making on average 15 calls a week.

According to a preferred embodiment of the present invention, 10 call notifications can be included in a single SMS to be sent from a user terminal (e.g. a mobile telephone) to the network operator.

As mentioned previously it is also desirable to express dropped calls as a ratio relative to the number of successful calls.

So each week to track dropped calls in a system where every event is notified, 15 x 13m /10 messages = 19.5m SMS per week, or 1 bn a year, will have to be issued. This increases the network operator's SMS load by 5%.

This represents a significant cost for the operator - even more so if the operator is actually an MVNO (mobile virtual network operator), paying another "host" network operator for services - e.g. SMS services.

The present inventors have therefore devised the present invention in order to try to reduce the notification rate, but still maintain a useful resolution on performance indicators that we are interested in.

Below it is shown how much data is needed about both dropped and normal calls in order to compute a suitably accurate dropped call ratio for each individual cell in this example network.

About 2% of calls actually disconnect due to some kind of error (a "dropped call") - the rest end expectedly due to one or other of the parties purposefully ending the call. If the errors only are reported, then there would be a need to send 20m SMS per year containing the notifications, or 0.1 % of total SMS volume.

However, as mentioned above, in order to analyse the dropped-call ratio, it is desirable to express the number of errors (e.g. dropped calls) relative to the calls that do not drop unexpectedly so as to put the number of errors in context. In essence, the present invention provides a means of reducing the probability, or likelihood, of a notification being generated for a normal call end so that the rate of reporting of such "successful" calls is reasonable - i.e. is not burdensome to the network.

In the above example, there are 15/7 x 13m /15000 calls per cell site per day which yields approximately 1900 calls per day, of which about 37 (2%) are dropped calls. This implies +/- 3% resolution on the "dropped calls per day for a cell" figure. In order to keep the overall figure in the +- 5% range, the estimate of total call numbers should be better than +-2%, implying at least 50 calls per day should be reported.

If the probability factor is set to 5, then a notification will be issued for 1 in 32 calls, with each notification having a "weight" of 32 calls. Therefore, the uncertainty in total call numbers will be 32/1900% = 1.7%

So, the total number of notifications is 37+50 per cell per day, which is 87*15000*365 /10 SMS per year = 48m/year which is 0.24% of total SMS load, but importantly still giving +-5% daily drop call rate in each cell.

Accordingly, it can be seen that the present invention provides a means for reporting service events across a network with a useful accuracy, whilst also not leading to a burden, or overloading, of the network.

The foregoing description of the preferred embodiments of the invention have been presented for purposes of illustration and description, it is not intended to be exhaustive or to limit the invention to the precise form disclosed, and modifications and variations are possible in light of the above teachings.

The invention includes the combination of the aspects and preferred features described except where such a combination is clearly impermissible or expressly avoided.

## Claims

1. A method of monitoring the performance of a telecommunications network, which network includes one or more user terminals each configured to be capable of communicating with a monitoring means of the network,
wherein the method includes the steps of:
providing in a user terminal, of the one or more user terminals, a respective weighting factor for each of a plurality of types of service event which can occur in the network;
the user terminal identifying the occurrence of a first event in the network, which first event is of a first type of service event belonging to the plurality of types of service event;
deriving within the user terminal the value of a notify factor on the basis of the value of the respective weighting factor associated with the identified first event, the value of the notify factor determining whether to issue a notification concerning the first event from the user terminal to the monitoring means or not; wherein
if it is determined.to send the notification, then the notification to be sent is configured to include weighting factor information which is indicative of the value of the weighting factor associated with the identified first event; **characterized in that**
the step of deriving the notify factor includes the step of generating a random number on the basis of the weighting factor, the value of the notify factor being based on the generated random number.

2. A method of monitoring the performance of a telecommunications network according to claim 1, wherein the notification judged to be sent is configured to include event information which is indicative of the nature of the first event.

3. A method of monitoring the performance of a telecommunications network according to any one of the preceding claims, further comprising the step of
the monitoring means receiving the notification sent from the user terminal of the one or more of the user terminals.

4. A method of monitoring the performance of a telecommunications network according to claim 3, further comprising the step of, within the monitoring means, determining the value of the weighting factor from the weighting factor information included in the received notification.

5. A method of monitoring the performance of a telecommunications network according to claim 4 as dependent on claim 2, further comprising the step of determining, in the monitoring means, the event type from the event information included in the received notification.

6. A method of monitoring the performance of a telecommunications network according to any one of the preceding claims, wherein the value of one or more of the respective weighting factors provided in the or each user terminal is modified by sending a modification instruction via the network to the or each user terminals.

7. A method of monitoring the performance of a telecommunications network according to any one of the preceding claims, wherein each of the one or more user terminals is configured to communicate within the network wirelessly.

8. A method of monitoring the performance of a telecommunications network according to any one of the preceding claims, wherein the network is a Radio Access Network (RAN).

9. A method of monitoring the performance of a telecommunications network according to any one of the preceding claims, wherein each user terminal is a telephone configured to communicate with the network wirelessly.

10. A user terminal (150, 160) for use in a telecommunications network, which network includes a monitoring means, the user terminal including:
storage means (210, 260) for storing a respective weighting factor for each of a plurality of types of service event which can occur in the network;
detection means for identifying the occurrence of one or more events in the network, each of which one or more events belongs to the plurality of types of service events which can occur in the network;
processing means (220) configured to derive the value of a notify factor on the basis of the value of the respective weighting factor associated with an identified first event, the first event being an event type belonging to the plurality of types of service event which can occur in the network, and being configured to determine whether or not to issue a notification concerning the first event from the user terminal to the monitoring means based on the value of the derived notify factor; and wherein
if it is determined to send the notification, then the notification to be sent is configured to include weighting factor information which is indicative of the value of the weighting factor associated with the identified first event;
**characterized in that** the processing means (220) is configured to derive the value of the notify factor by generating a random number on the basis of the weighting factor, the value of the notify factor being based on the generated random number.

11. A user terminal (150, 160) according to claim 10, wherein the notification judged to be sent is configured to include event information which is indicative of the nature of the first event.

12. A telecommunications network including monitoring means and a user terminal (150, 160) according to any one of claims 10 and 11, wherein the monitoring means is configured to receive, directly or indirectly from the user terminal, a notification, according to claim 1 and to determine the value of the weighting factor from the weighting factor information included in the received notification.

13. A telecommunications network according to claim 12,
wherein the monitoring means is further configured to determine the event type from the event information included in the received notification.

14. A telecommunications network according to any one of claims 12 to 13,
wherein each respective weighting factor provided in the or each user terminal is able to be modified by a modification instruction sent across the network to the or each user terminals; and/or
wherein the telecommunications network includes a Radio Access Network, RAN;
and/or
wherein each user terminal includes a telephone configured to communicate with the network wirelessly.

## Patentansprüche

1. Verfahren zum Überwachen des Leistungsverhaltens eines Telekommunikationsnetzwerks, wobei das Netzwerk eine oder mehrere Benutzerendstellen umfasst, die jeweils konfiguriert sind, um mit einem Überwachungsmittel des Netzwerks zu kommunizieren,
worin das Verfahren folgende Schritte umfasst:
Bereitstellen eines jeweiligen Gewichtungsfaktors für jede einer Vielzahl von Dienstereignisarten, die im Netzwerk auftreten können, in einer Benutzerendstelle der einen oder mehreren Benutzerendstellen;
Identifizieren des Auftretens eines ersten Ereignisses in dem Netzwerk durch die Benutzerendstelle, wobei dieses erste Ereignis von einer ersten Dienstereignisart ist, die der Vielzahl von Dienstereignisarten angehört;
Ableiten des Werts eines Benachrichtigungsfaktors auf der Grundlage des Werts des jeweiligen Gewichtungsfaktors, der dem identifizierten ersten Ereignis zugeordnet ist, innerhalb der Benutzerendstelle, wobei der Wert des Benachrichtigungsfaktors bestimmt, ob eine Benachrichtigung in Bezug auf das erste Ereignis von der Benutzerendstelle zum Überwachungsmittel gesendet wird oder nicht; worin
wenn bestimmt wird, die Benachrichtigung zu senden, die zu sendende Benachrichtigung konfiguriert ist, um Gewichtungsfaktorinformationen einzuschließen, die für den Wert des Gewichtungsfaktors indikativ sind, der dem identifizierten ersten Ereignis zugeordnet ist; **dadurch gekennzeichnet, dass**
der Schritt des Bestimmens des Benachrichtigungsfaktors den Schritt des Generierens einer Zufallszahl auf der Grundlage des Gewichtungsfaktors umfasst, wobei der Wert des Benachrichtigungsfaktors auf der generierten Zufallszahl basiert.

2. Verfahren zum Überwachen des Leistungsverhaltens eines Telekommunikationsnetzwerks nach Anspruch 1, worin die als zu sendende eingestufte Benachrichtigung konfiguriert ist, um Ereignisinformationen zu umfassen, die für die Art des ersten Ereignisses indikativ ist.

3. Verfahren zum Überwachen des Leistungsverhaltens eines Telekommunikationsnetzwerks nach einem der vorangegangenen Ansprüche, wobei das Verfahren ferner folgenden Schritt umfasst:
Empfangen der Benachrichtigung, die von der Benutzerendstelle der einen oder mehreren Benutzerendstellen gesendet wurde, durch das Überwachungsmittel.

4. Verfahren zum Überwachen des Leistungsverhaltens eines Telekommunikationsnetzwerks nach Anspruch 3, ferner umfassend den Schritt des Bestimmens des Werts des Gewichtungsfaktors anhand der Gewichtungsfaktorinformationen, die in der empfangenen Benachrichtigung enthalten sind, innerhalb des Überwachungsmittels.

5. Verfahren zum Überwachen des Leistungsverhaltens eines Telekommunikationsnetzwerks nach Anspruch 4, abhängig von Anspruch 2, ferner umfassend den Schritt des Bestimmens der Ereignisart anhand der Ereignisinformationen, die in der empfangenen Benachrichtigung enthalten sind, im Überwachungsmittel.

6. Verfahren zum Überwachen des Leistungsverhaltens eines Telekommunikationsnetzwerks nach einem der vorangegangenen Ansprüche, worin der Wert von einem oder mehreren der jeweiligen Gewichtungsfaktoren, der/die in der einen oder in jeder Benutzerendstelle bereitgestellt ist/sind, durch das Senden einer Änderungsanweisung über das Netzwerk an die eine oder jede Benutzerendstelle verändert wird.

7. Verfahren zum Überwachen des Leistungsverhaltens eines Telekommunikationsnetzwerks nach einem der vorangegangenen Ansprüche, worin jede der einen oder der mehreren Benutzerendstellen konfiguriert ist, um innerhalb des Netzwerks drahtlos zu kommunizieren.

8. Verfahren zum Überwachen des Leistungsverhaltens eines Telekommunikationsnetzwerks nach einem der vorangegangenen Ansprüche, worin das Netzwerk ein Funkzugangsnetzwerk (RAN) ist.

9. Verfahren zum Überwachen des Leistungsverhaltens eines Telekommunikationsnetzwerks nach einem der vorangegangenen Ansprüche, worin jede Benutzerendstelle ein Telefon ist, das konfiguriert ist, um mit dem Netzwerk drahtlos zu kommunizieren.

10. Benutzerendstelle (150, 160) zur Verwendung in einem Telekommunikationsnetzwerk, wobei das Netzwerk ein Überwachungsmittel umfasst, wobei die Benutzerendstelle Folgendes umfasst:
Speichermittel (210, 260) zum Speichern eines jeweiligen Gewichtungsfaktors für jedes einer Vielzahl von Dienstereignisarten, die in dem Netzwerk auftreten können;
Detektionsmittel zum Identifizieren des Auftretens eines oder mehrerer Ereignisse im Netzwerk, von denen eines oder mehrere Ereignisse der Vielzahl von Dienstereignisarten angehören, die in dem Netzwerk auftreten können:
Verarbeitungsmittel (220), die konfiguriert sind, um den Wert eines Benachrichtigungsfaktors auf der Grundlage des Werts des jeweiligen Gewichtungsfaktors abzuleiten, der einem identifizierten ersten Ereignis zugeordnet ist, wobei das erste Ereignis eine Ereignisart ist, die der Vielzahl von Dienstereignisarten angehören, die in dem Netzwerk auftreten können, und konfiguriert sind, um basierend auf dem Wert des abgeleiteten Benachrichtigungsfaktors zu bestimmen, ob eine Benachrichtigung in Bezug auf das erste Ereignis von der Benutzerendstelle zum Überwachungsmittel gesendet wird oder nicht; und worin
wenn bestimmt wird, die Benachrichtigung zu senden, die zu sendende Benachrichtigung konfiguriert ist, um Gewichtungsfaktorinformationen einzuschließen, die für den Wert des Gewichtungsfaktors indikativ sind, der dem identifizierten ersten Ereignis zugeordnet ist; **dadurch gekennzeichnet, dass**
das Verarbeitungsmittel (220) konfiguriert ist, um den Wert des Benachrichtigungsfaktors abzuleiten, indem eine Zufallszahl auf der Grundlage des Gewichtungsfaktors generiert wird, wobei der Wert des Benachrichtigungsfaktors auf der generierten Zufallszahl basiert.

11. Benutzerendstelle (150, 160) nach Anspruch 10, worin die als zu sendende eingestufte Benachrichtigung konfiguriert ist, um Ereignisinformationen zu umfassen, die für die Art des ersten Ereignisses indikativ ist.

12. Telekommunikationsnetzwerk, umfassend Überwachungsmittel und eine Benutzerendstelle (150, 160) nach einem der Ansprüche 10 und 11, worin die Überwachungseinheit konfiguriert ist, um nach Anspruch 1 eine Benachrichtigung von der Benutzerendstelle direkt oder indirekt zu empfangen und den Wert des Gewichtungsfaktors anhand der Gewichtungsfaktorinformationen, die in der empfangenen Benachrichtigung enthalten ist, zu bestimmen.

13. Telekommunikationsnetzwerk nach Anspruch 12, worin das Überwachungsmittel ferner konfiguriert ist, um die Ereignisart anhand der in der empfangenen Benachrichtigung enthaltenen Ereignisinformationen zu bestimmen.

14. Telekommunikationsnetzwerk nach einem der Ansprüche 12 und 13,
worin jeder jeweilige Gewichtungsfaktor, der in der einen oder in jeder Benutzerendstelle bereitgestellt ist, durch eine Änderungsanweisung, die über das Netzwerk zu der einen oder zu jeder Benutzerendstelle gesendet wird, verändert werden kann; und/oder
worin das Telekommunikationsnetzwerk ein Funkzugangsnetzwerk, RAN, umfasst; und/oder
worin jede Benutzerendstelle ein Telefon umfasst, das konfiguriert ist, um mit dem Netzwerk drahtlos zu kommunizieren.

## Revendications

1. Procédé de surveillance de la performance d'un réseau de télécommunications, ledit réseau comprend un ou plusieurs terminaux utilisateurs, chacun configuré pour être apte à communiquer avec un moyen de surveillance du réseau,
où le procédé comprend les étapes de :
réaliser dans un terminal utilisateur, d'un ou de plusieurs terminaux utilisateurs, un facteur de pondération respectif pour chacun d'une pluralité de types d'évènement de service qui peuvent se produire dans le réseau ;
le terminal utilisateur identifiant la survenue d'un premier évènement dans le réseau, ledit premier évènement est d'un premier type d'évènement de service appartenant à la pluralité de types d'évènement de service ;
dériver dans le terminal utilisateur la valeur d'un facteur de notification sur la base de la valeur du facteur de pondération respectif associée au premier évènement identifié, la valeur du facteur de notification déterminant s'il y a lieu d'émettre une notification concernant le premier évènement du terminal utilisateur au moyen de surveillance ou non ; où
s'il est déterminé d'envoyer la notification, alors la notification à envoyer est configurée pour inclure l'information du facteur de pondération qui est indicative de la valeur du facteur de pondération associé au premier évènement identifié ; **caractérisé en ce que**
l'étape de dérivation du facteur de notification comprend l'étape consistant à générer un nombre aléatoire sur la base du facteur de pondération, la valeur du facteur de notification étant basée sur le nombre aléatoire produit.

2. Procédé de surveillance de la performance d'un réseau de télécommunications selon la revendication 1, dans lequel la notification considérée comme devant être envoyée est configurée pour inclure l'information d'évènement qui est indicative de la nature du premier évènement.

3. Procédé de surveillance de la performance d'un réseau de télécommunications selon l'une quelconque des revendications précédentes, comprenant en outre l'étape de
le moyen de surveillance recevant la notification envoyée du terminal utilisateur d'un ou de plusieurs terminaux utilisateur.

4. Procédé de surveillance de la performance d'un réseau de télécommunications selon la revendication 3, comprenant en outre l'étape, dans le moyen de surveillance, de déterminer la valeur du facteur de pondération à partir de l'information du facteur de pondération incluse dans la notification reçue.

5. Procédé de surveillance de la performance d'un réseau de télécommunications selon la revendication 4 dépendant de la revendication 2, comprenant en outre l'étape consistant à déterminer, dans le moyen de surveillance, le type d'évènement de l'information d'évènement incluse dans la notification reçue.

6. Procédé de surveillance de la performance d'un réseau de télécommunications selon l'une quelconque des revendications précédentes, dans lequel la valeur d'un ou de plusieurs des facteurs de pondération respectifs réalisés dans le ou chaque terminal utilisateur est modifiée en envoyant une instruction de modification via le réseau au ou à chaque terminal utilisateur.

7. Procédé de surveillance de la performance d'un réseau de télécommunications selon l'une quelconque des revendications précédentes, dans lequel un ou plusieurs terminaux utilisateurs précités sont configurés pour communiquer avec le réseau sans fil.

8. Procédé de surveillance de la performance d'un réseau de télécommunications selon l'une quelconque des revendications précédentes, dans lequel le réseau est un Réseau d'Accès Radio (RAN).

9. Procédé de surveillance de la performance d'un réseau de télécommunications selon l'une quelconque des revendications précédentes, dans lequel chaque terminal utilisateur est un téléphone configuré pour communiquer avec le réseau sans fil.

10. Terminal utilisateur (150, 160) pour utilisation dans un réseau de télécommunications, ledit réseau comprend un moyen de surveillance, le terminal utilisateur incluant :
un moyen de stockage (210, 260) pour stocker un facteur de pondération respectif pour chacun d'une pluralité de types d'événements de service qui peuvent se produire dans le réseau ;
un moyen de détection pour identifier la survenue d'un ou de plusieurs évènements dans le réseau, chacun des un ou plusieurs évènement appartenant à la pluralité de types d'évènements de service qui peuvent se produire dans le réseau ;
un moyen de traitement (220) configuré pour dériver la valeur d'un facteur de notification sur la base de la valeur du facteur de pondération respectif associé à un premier évènement identifié, le premier évènement étant un type d'évènement appartenant à la pluralité de types d'évènements de service qui peuvent se produire dans le réseau, et étant configuré pour déterminer s'il y a lieu ou non d'émettre une notification concernant le premier évènement du terminal utilisateur au moyen de surveillance sur la base de la valeur du facteur de notification dérivé ; et où
s'il est déterminé d'envoyer la notification, alors la notification à envoyer est configurée pour inclure l'information du facteur de pondération qui est indicative de la valeur du facteur de pondération associé au premier évènement identifié ;
**caractérisé en ce que** le moyen de traitement (220) est configuré pour dériver la valeur du facteur de notification en produisant un nombre aléatoire sur la base du facteur de pondération, la valeur du facteur de notification étant basée sur le nombre aléatoire produit.

11. Terminal utilisateur (150, 160) selon la revendication 10, dans lequel la notification considérée comme devant être envoyée est configurée pour inclure l'information d'évènement qui est indicative de la nature du premier évènement.

12. Réseau de télécommunications incluant le moyen de surveillance et un terminal utilisateur (150, 160) selon l'une quelconque des revendications 10 et 11, dans lequel le moyen de surveillance est configuré pour recevoir, directement ou indirectement du terminal utilisateur, une notification selon la revendication 1 et pour déterminer la valeur du facteur de pondération à partir de l'information du facteur de pondération incluse dans la notification reçue.

13. Réseau de télécommunications selon la revendication 12, dans lequel le moyen de surveillance est configuré en outre pour déterminer le type d'évènement à partir de l'information d'évènement incluse dans la notification reçue.

14. Réseau de télécommunications selon l'une quelconque des revendications 12 à 13, dans lequel chaque facteur de pondération respectif réalisé dans le ou chaque terminal utilisateur est apte à être modifié par une instruction de modification envoyée par le réseau au ou à chaque terminal utilisateur ; et/ou
où le réseau de télécommunications comprend un Réseau d'Accès Radio, RAN ; et/ou
où chaque terminal utilisateur comprend un téléphone configuré pour communiquer avec le réseau sans fil.
